# EUROPEAN PATENT SPECIFICATION

(11) **EP 4 144 589 B1**
(45) Date of publication and mention of the grant of the patent: **08.05.2024**
(21) Application number: 21195334.4
(22) Date of filing: 07.09.2021
(51) Int. Cl.: B60R 11/00

(54) **A SUPPORT AND HOLDING ASSEMBLY FOR A PORTABLE ELECTRONIC DEVICE, AND A VEHICLE DASHBOARD PROVIDED WITH THIS SUPPORT AND HOLDING ASSEMBLY**
TRÄGER- UND HALTERUNGSANORDNUNG FÜR EINE TRAGBARE ELEKTRONISCHE VORRICHTUNG SOWIE ARMATURENBRETT EINES FAHRZEUGS MIT DIESER TRÄGER- UND HALTERUNGSANORDNUNG
ENSEMBLE DE SUPPORT ET DE MAINTIEN D'UN DISPOSITIF ÉLECTRONIQUE PORTABLE ET TABLEAU DE BORD DE VÉHICULE ÉQUIPÉ DE CET ENSEMBLE DE SUPPORT ET DE MAINTIEN

(43) Date of publication of application: 08.03.2023
(73) Proprietor: Stellantis Europe S.p.A., 10135 Torino, (TO) (IT)
(72) Inventor: VIOTTI, Francesco, 10135 TORINO (IT); GAGLIARDONE, Giorgio, 10135 TORINO (IT)
(74) Representative: Studio Torta S.p.A.

(56) References cited:
- EP-A1- 2 546 105
- DE-B3-102009 036 326
- DE-U1-202011 106 185
- US-A1- 2014 203 585

## Description

This invention relates to a support and holding assembly for arranging a portable electronic device in a fixed reference position, in particular in a passenger compartment of a vehicle, to which the following discussion will make explicit reference without losing any generality thereby.

In this regard, it is known that portable electronic devices, such as, for example, cellular phones, satellite navigators, tablets, etc., are extremely widespread and are also used in vehicles. In general, the portable electronic device is coupled so that it can be coupled in a releasable manner to a support provided in the passenger compartment. In some solutions, this support is defined by a structure carried by the dashboard of the vehicle. It projects from this dashboard upwards and, in general, has a seat or a jaw where the portable electronic device can be inserted/clamped. In other solutions, the support is defined by a structure that is attached to the windscreen of the vehicle via a suction cup.

The first type of solutions, i.e. the one involving a support that is firmly coupled to the dashboard, is the preferred solution, since it is the safest, both as far as regarding its ensuring against undesired disengagements, and for the fact that it blocks external visibility through the windscreen less.

There is, however, the need to improve this type of solution, in particular to be able to hide or remove the support when the portable electronic device is not coupled to this support, and to facilitate the engagement and disengagement of the portable electronic device, while continuing to ensure a high degree of safety in its positioning and holding.

EP2546105A1 discloses a withdrawable apparatus for mounting a portable device in an vehicle; this apparatus has a mount which is drawn out using an electromotive force, with an upper and a lower mounting member that are unfolded in the vertical direction by a torsion spring.

The purpose of this invention is to make a support and holding assembly for a portable electronic device, which makes it possible to fulfil, in a simple and economical manner, the requirements described above.

According to this invention, a support and holding assembly for a portable electronic device, as defined in the attached claims from 1 to 15, and a dashboard for a vehicle as defined in claim 16, are provided.

This invention will now be described with reference to the attached drawings that illustrate a non-limiting embodiment thereof, in which:
- Figure 1 illustrates, in perspective from below and with parts removed for clarity, a preferred embodiment of the support and holding assembly for a portable electronic device, according to the precepts of this invention;
- Figure 2 is a cross section, according to a plane section defined by the line II-II in Figure 1;
- Figures 3 to 6 are similar to Figure 2 and show an action that, at first, carries the assembly from a withdrawn rest position to an advanced position and, then, locks the portable electronic device in a reference position;
- Figure 7 is a cross section, according to a plane section defined by the line VII-VII in Figure 1, and corresponds to the operating condition shown in Figure 6; and
- Figure 8 is similar to Figure 7 and shows an action that withdraws the support and holding assembly from the advanced position to an operating position.

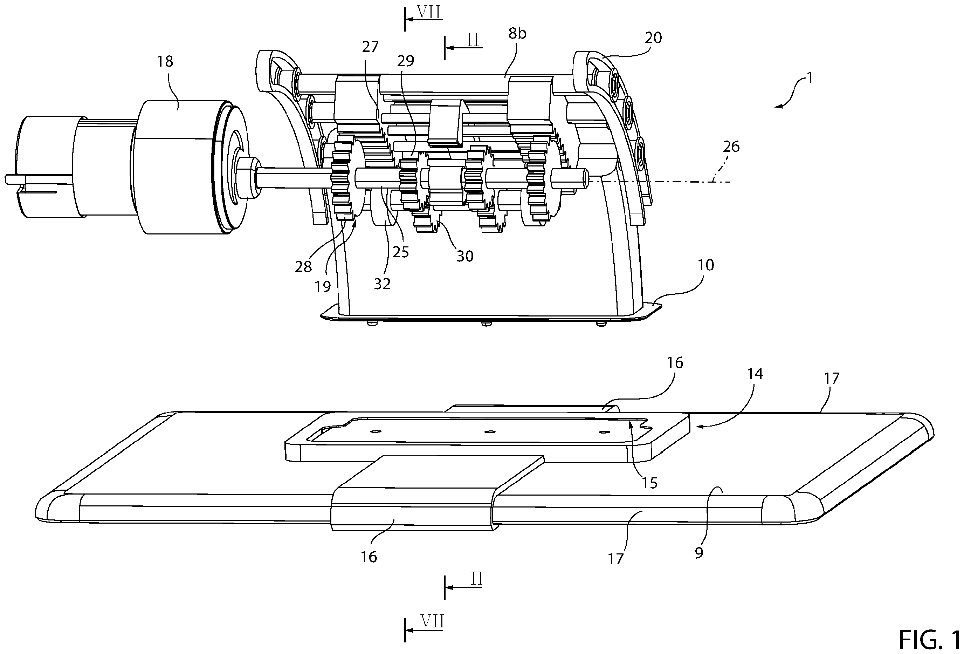

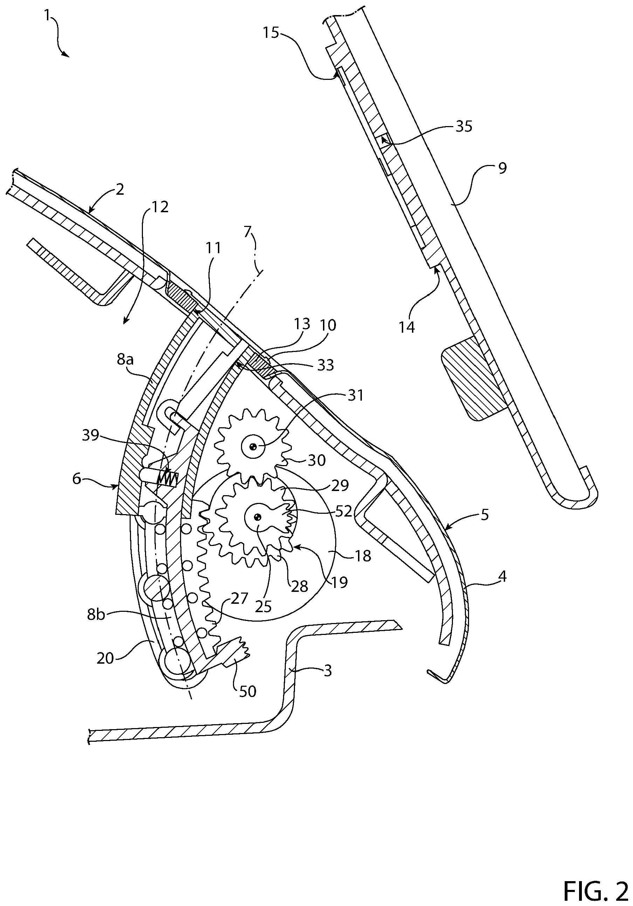

In Figure 1, the reference number 1 denotes, as a whole, a support and holding assembly (partially illustrated), defining a component that, in the specific described example, is part of a dashboard 2 (partially illustrated in Figures 2 to 8) arranged in a passenger compartment of a vehicle.

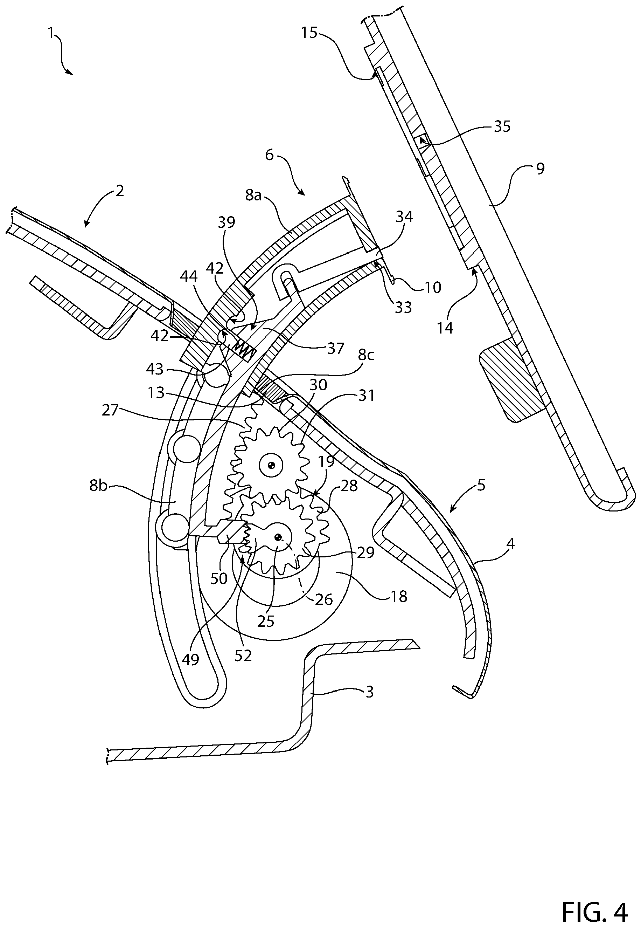

With reference to Figure 2, the dashboard 2 comprises a support structure 3 and a shell 4 made of plastic, having an outer surface 5 that defines a front area of the passenger compartment. In particular, at least a part of the surface 5 is facing upwards and, therefore, faces a windscreen (not illustrated) of the vehicle. The assembly 1 is fixed to the structure 3 in a manner not described in detail, and comprises a support member 6, which can be moved in relation to the structure 3 between a withdrawn rest position (Fig. 2) and an advanced position (Fig. 4-7).

The member 6 extends along an axis 7 and comprises two portions 8a and 8b, axially opposite each other: the portion 8a has, at one end thereof, a coupling system with a structure, shape, and size that enable the manual coupling of a portable electronic device 9 to the assembly 1, in a reference position. In the particular example illustrated, the coupling system is defined by a flange 10 that is arranged along a perimeter edge of the portion 8a, so as to define a projecting fin that lies on a plane orthogonal to the axis 7.

In the withdrawn rest position, the portion 8a is arranged at a through opening 11 formed in the shell 4. In other words, the portion 8a engages and closes the opening 11, while the member 6 does not project into the passenger compartment, but is hidden in an inner space 12 in the dashboard 2 (except for the flange 10, which is basically flush with the surface 5). In practice, therefore, the member 6 is retractable. In detail, the flange 10 is arranged to rest on a seal 13 that defines the edge of the opening 11 and slides in contact with the lateral surface of the member 6, so as to seal and insulate the space 12 of the passenger compartment.

With reference to Figure 4, in the advanced position, the portion 8a projects into the passenger compartment, so that the user can easily couple and uncouple the device 9 to the member 6. In the particular example illustrated, the device 9, before being mounted on the member 6, is coupled in a fixed position to an interface element 14, which, in turn, is coupled to the portion 8a. In the particular illustrated example, the interface element 14 comprises at least one seat 15 designed to be engaged by the flange 10 so as to define a bayonet coupling (more specifically: a coupling requiring the device 9 to slide in a direction orthogonal to the axis 7, for example downwards, to engage the flange 10 in the seat 15 and, thus, bringing the device 9 into the above-mentioned reference position).

The interface element 14 is preferably an adapter element, i.e., it is able to adapt to devices 9 with different sizes: for example, with reference to Figure 1, the interface element 14 comprises two arms 16 that are shaped so as to engage opposite edges 17 of the device 9 and can translate, or be elastically deformed, to adapt to different widths of the device 9 (for example from 10 to 14 inches). The mechanism to modulate the interface element 14 could, however, be different from the configuration just described.

Alternatively, the interface element 14 can be interchangeable with other interfaces that have different sizes and/or shapes, each configured to be coupled with a corresponding electronic device model.

According to not illustrated variants (that could, however, be less desirable in terms of aesthetics), the portion 8a is provided with a coupling system having features that enable direct coupling with the device 9, in a releasable manner, without any interface.

In order to shift between the advanced and withdrawn positions, the assembly 1 comprises an electric motor 18, a transmission 19 for transmitting the movement from the motor 18 to the member 6, and a guide 20, which couples the portion 8b to the structure 3 and enables the member 6 to translate when operated by the motor 18.

In the specific illustrated example, the translation trajectory defined by the guide 20 is parallel to the axis 7. In particular, this trajectory is an arc of a circle, with the concavity facing towards the passenger compartment and/or downwards.

In general, the member 6 coupling mode and the trajectory thereof are of secondary importance: for example, the guide 20 could be replaced by a hinge, lever, or articulated quadrilateral system, or it could be straight, and not curved.

The advanced position and the withdrawn rest position of the member 6 are preferably end-of-stroke positions, defined by corresponding shoulders or stop systems: for example, the stop in the withdrawn rest position is defined by the flange 10 abutting against the seal 13. For the stop in the advanced position, the corresponding stop system may be defined by the abutting of a projection 8c of the member 6, carried, for example, by the portion 8b, against an internal surface of the shell 4 and/or against the same seal 13 (Fig. 4-6).

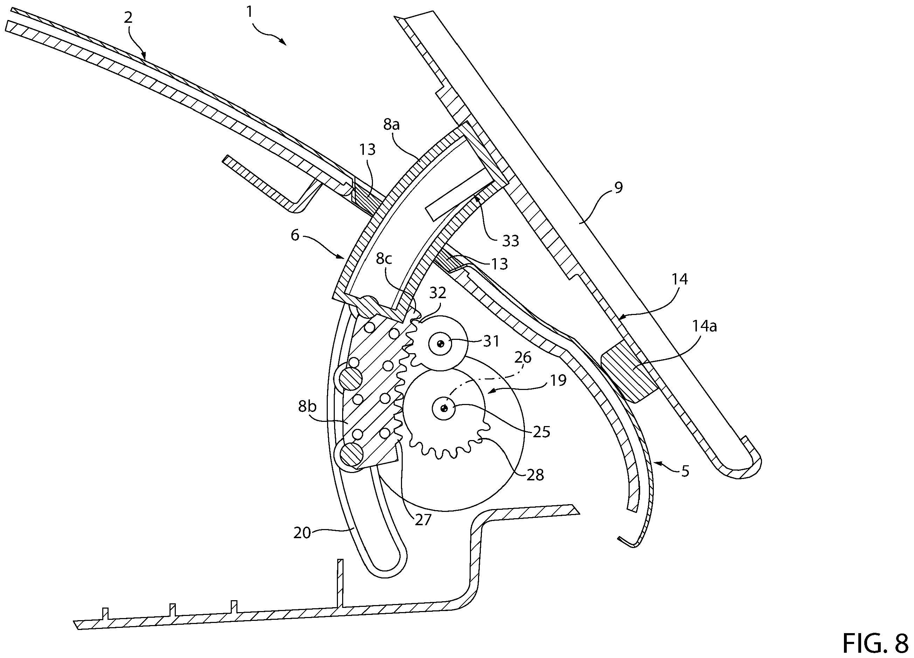

In the normal operating conditions, in which the user observes and uses the device 9, the member 6 is arranged in an operating position (Figure 8) that does not coincide with the advanced position, in the particular example illustrated, but it is intermediate between the latter and the withdrawn rest position. However, after having coupled the device 9 to the portion 8a, the member 6 is withdrawn until it reaches this operating position, again thanks to the action of the motor 18, as will be better described below. The advanced position, however, is only used to couple, and uncouple, the device 9. The withdrawal in the operating position is envisaged to ensure the correct opening of an airbag device, not illustrated, housed in the dashboard 2 (for example in a zone between the assembly 1 and the windscreen). In any case, according to variants not illustrated, the operating position and the advanced position may coincide (i.e., no withdrawal is envisaged after having mounted the device 9 on the portion 8a).

Again, with reference to Figure 1, the assembly 1 comprises a motor shaft 25, which is arranged in a fixed position in relation to the structure 3 (for example, it is supported by bearings that are not illustrated) and extends along a horizontal axis 26 distanced from the member 6 (and orthogonal to a longitudinal plane on which the axis lies 7). The shaft 25 rotates around the axis 26 when acted upon by the motor 18.

With reference to Figures 1 and 2, the transmission 19 is preferably a toothed transmission comprising:
- at least one rack 27, which is fixed in relation to the member 6 and is parallel to the trajectory defined by the guide 20; and
- at least one pinion 28, which is carried in a fixed position by the shaft 25 and has a toothing that meshes with the rack 27 only when the member 6 needs to shift from the advanced position to the withdrawn one, and vice versa, while it is disengaged from the rack 27 when the member 6 needs to shift from the advanced position to the operating one, and vice-versa.

The transmission 19 preferably further comprises at least one pair of idler gears 29 and 30: the gear 29 is carried in a fixed position by the shaft 25 and, thus, rotates together with the pinion 28, while the other gear 30 is carried in a fixed position by a transmission shaft 31 parallel to the shaft 25 and engages with the gear 29 so as to rotate the shaft 31 in the opposite direction. At the same time, the shaft 31 is arranged in a fixed position in relation to the structure 3 (for example it is supported by bearings that are not illustrated).

With reference to Figures 1 and 8, then, the transmission 19 comprises at least one pinion 32, which is carried in a fixed position by the shaft 31 and has a toothing that engages with the rack 27 only when the member 6 needs to shift from the advanced position to the operating one, and vice-versa, while it is disengaged from the rack 27 when the member 6 needs to shift between the two end-of-stroke positions defined by the advanced position and the withdrawn one.

Therefore, the toothings of the pinions 28 and 32 selectively engage the rack 27, i.e., the one alternates with the other, depending on the rotation angle of the motor 18 and of the shaft 25. In particular, the pinions 28 and 32 have the shape of a toothed wheel without a toothing for a pre-defined angle, established for each project. According to a variant not illustrated, the pinions 28 and 32 could be defined by corresponding toothed segments.

For a certain rotation angle interval of the shaft 25, the rack 27 is preferably disengaged from both the pinions 28 and 32. In this step, the member 6 is arranged in the advanced position (Figures 4 to 7) and is preferably held in this position, for example by the above-mentioned stop system not illustrated.

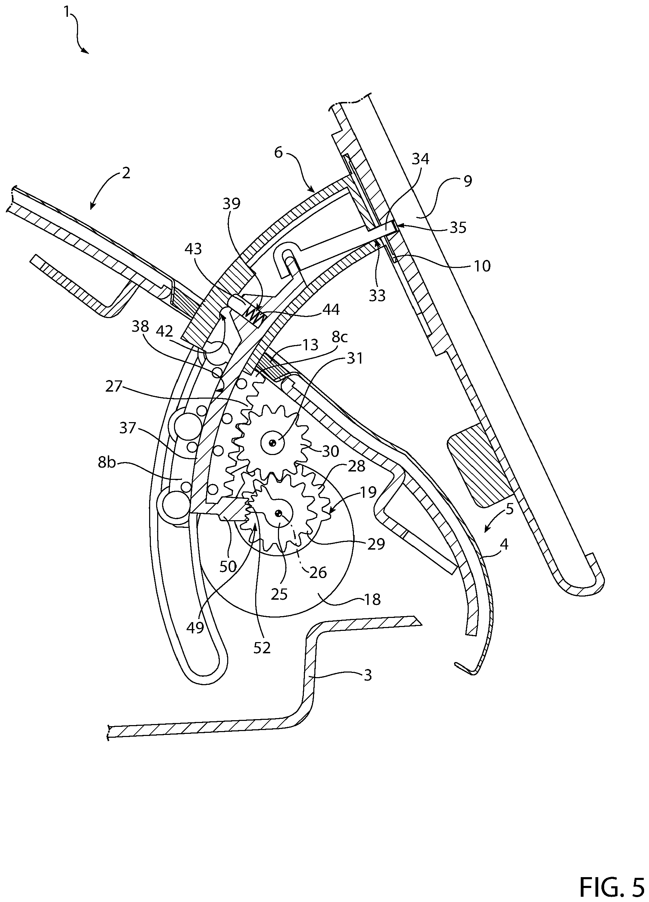

With reference to Figures 4 and 5, the assembly 1 further comprises a retention member 33 that is carried by the member 6 and, when the latter is in the advanced position, it is moved to block the device 9 and/or the interface element 14 in the reference position, in order to avoid these components from being accidentally disengaged during use.

The member 33 can be moved in relation to the other member 6 between an engaged position and a disengaged position: in the engaged position (Fig. 5), the member 33 projects from the portion 8a to be coupled with a corresponding shoulder 35 of the device 9 and/or of the interface element 14, and, therefore, to avoid these components from being disengaged; in the disengaged position (Fig. 4), the device 9 and the interface element 14 (if included) can be freely mounted and disassembled.

The member 33 comprises at least one tooth or bolt 34 that can slide along the axis 7 to engage/disengage a corresponding seat formed in the interface element 14 and defining the shoulder 35 (in this way, the flange 10 is blocked from sliding in the seat 15).

In particular, the member 33 comprises a slide 37 that carries the tooth 34 to one end thereof and is coupled to the member 6 via a guide 38. In particular, the trajectory defined by the guide 38 is curved (in the example illustrated, it is parallel to the axis 7). More preferably, the guide 38 is arranged at the portion 8b, and an end part of the slide 37 slides inside the portion 8a and, as mentioned above, supports the tooth 34.

The assembly 1 also comprises an attachment and positioning device 39 that exerts a holding force that keeps the member 33 in the engaged and disengaged positions in relation to the member 6. To be able to shift the member 33, a threshold value of this force must be exceeded. The device 39, for example, comprises two retention seats 42 selectively engaged by a retention element 43 (for example with a spherical end), in turn pushed by a spring 44 (with a pretensioning that defines the above-mentioned threshold value). In detail, the retention element 43 and the spring 44 are carried by the retention member 33, in particular by an intermediate portion of the slide 37, while the seats 42 are formed in a wall of the member 6 (but, alternatively, an inverse configuration could be adopted). In each case, the device 39 could be of a different type, for example, it could use friction holding, instead of using the pretensioning of the spring 44 to hold the member 33.

According to one preferred aspect of this invention, the member 33 is also driven by the shaft 25 via a transmission 49. In other words, the assembly 1 has a single motor 18 and a single shaft 25 to shift both the members 6 and 33. Generally, however, alternative solutions, which have a first motor shaft dedicated to driving the member 6 and a second motor shaft dedicated to driving the other member 33, are not excluded.

The motor 18 is preferably permanently coupled to both the transmissions 19 and 49 without using additional clutches or selectors that need to direct the motion to one or the other of these transmissions. The transmission 49 acts in order to translate the member 33 in relation to the other member 6 when the latter is disengaged from the pinions 28 and 32 of the transmission 19, as shown in Fig. 5.

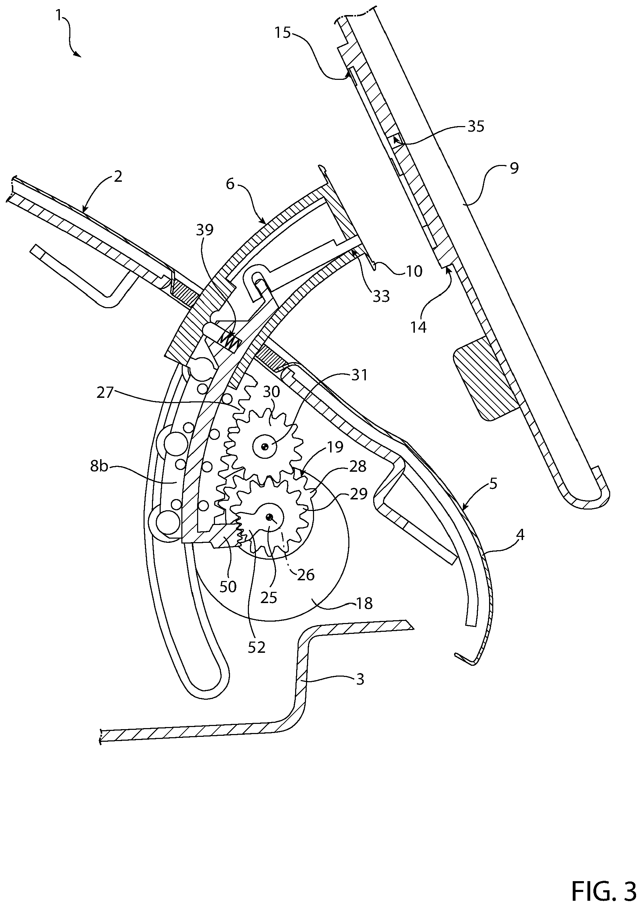

The transmission 49 is a rack and pinion drive and comprises a rack 50, which is fixed in relation to the member 33 and is basically parallel to the trajectory defined by the guide 38. The transmission 49 further comprises a pinion 52 carried in a fixed position by the shaft 25, to drive the rack 50. The pinion 52 is defined by a toothed segment, but, alternatively, it could have the same configuration of the pinions 28 and 32 (toothed wheels without, for a certain angle, toothings). The pinion 52 meshes with the rack 50 when the member 6 is arranged
- in the advanced position (Figures 4 and 5) and
- along a final part of the progress between the two end-of-stroke positions, near the advanced position (i.e., the part of the stroke between Fig. 3 and 4) .

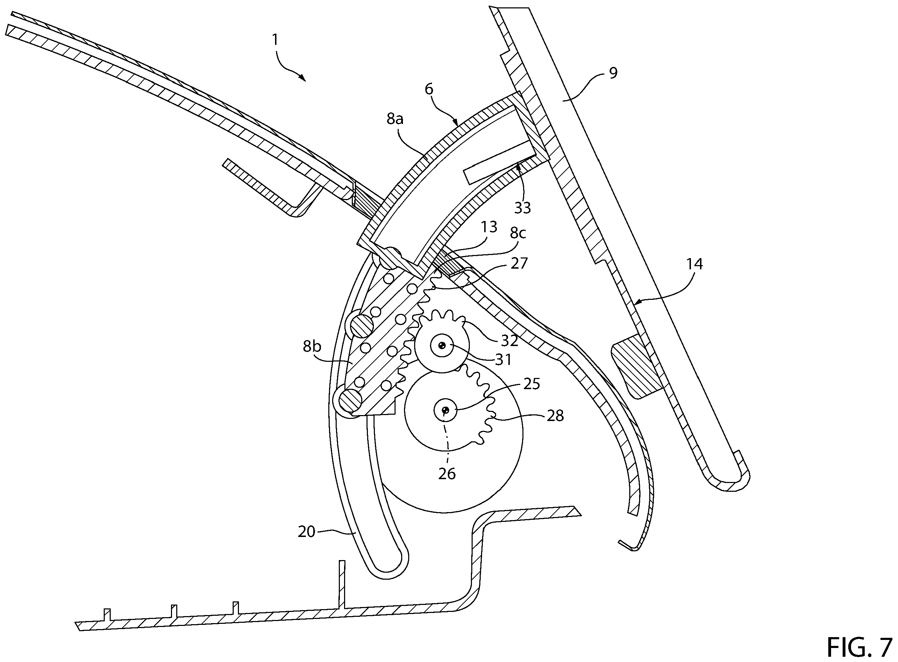

The toothing of the pinion 52 is disengaged from the rack 50:
- in the remaining part of the stroke between the two end-of-stroke positions (i.e., the part of the stroke between Fig. 2 and 3) and
- when the member 6 shifts from the advanced position to the operating one, and vice versa (i.e., the stroke envisaged between Fig. 7 and 8).

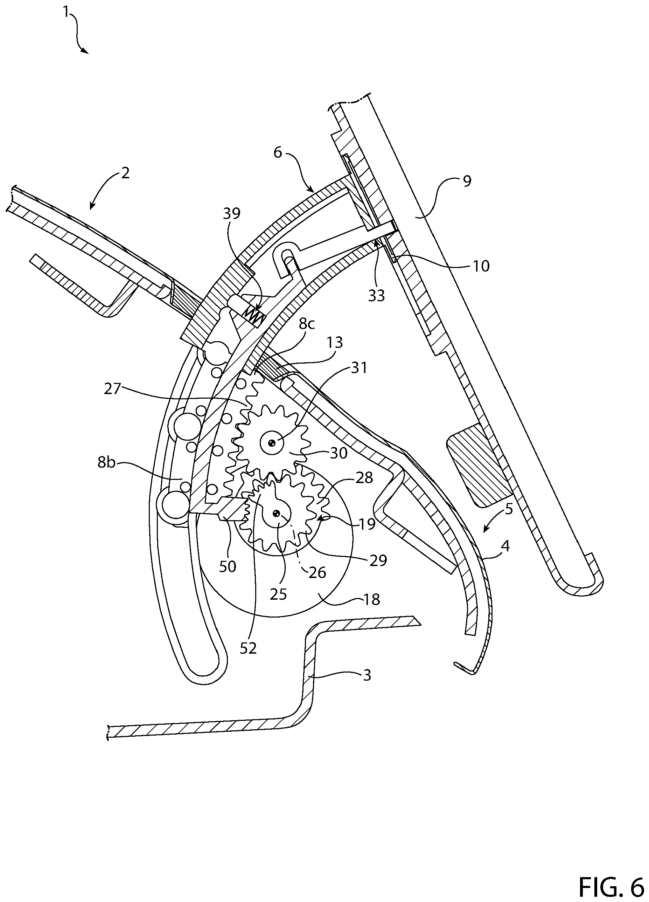

In other words, when the motor 18 is controlled to drive the transmissions 19 and 49, the following steps occur, beginning from the withdrawn rest position in Fig. 2:
1. in the withdrawn position (Fig. 2), the toothing of the pinion 28 meshes with the rack 27; the member 33 is in the release position; the pinions 32 and 52 are disengaged from the racks 27 and 50;
2. by starting the motor 18, the shaft 25 begins to rotate and, thus, the pinion 28 causes the translation of the rack 27; the components 6 and 33 translate together towards the advanced position, being attached by the device 39; the member 33 remains, therefore, in the release position, while the pinions 32 and 52 continue to be disengaged from the corresponding racks 27 and 50, so that they idle;
3. while the shaft 25 continues to rotate, at the advanced position (Fig. 3), the toothing of the pinion 52 begins to engage the rack 50; the members 6 and 33 continue to translate together towards the advanced position, while the pinion 32 continues to idle;
4. when the member 6 reaches the advanced position (Fig. 4), the motor 18 stops; the toothing of the pinion 28 has finished its task and is just disengaged from the rack 27, while the toothing of the pinion 52 continues to engage the rack 50;
5. after having mounted the device 9 on the assembly 1 (Fig. 5), the motor 18 is restarted (via a manual command by the user, or via a signal from a sensor or a switch, e.g. defined by an electrical contact that automatically closes a circuit, when the interface element 14 is mounted on the member 6 and the latter reaches its predefined reference position in the seat 15 of the interface element 14), so that the toothing of the pinion 52, by rotating, acts on the rack 50, overtakes the retention action of the device 39, and causes the member 33 to shift into the engaged position; at the same time, the pinions 28 and 32 idle (so that the rack 27 is free), while the member 6 remains in the advanced position (e.g. held by the friction of the seal 13 against the portion 8a, and/or by a stop system, not illustrated and possibly similar to the device 39);
6. continuing to rotate the shaft 25, and thus the pinion 52, the latter is disengaged from the rack 50 (see Fig. 6, where this step is illustrated in an approximate way), while the member 33 remains in the engaged position, and the pinion 28 continues to idle;
7. at the same time, the toothing of the pinion 32 starts to engage the rack 27 (Fig. 7); at this point, with the pinions 28 and 52 disengaged from the racks 27 and, respectively, 50, the member 6 starts to withdraw due to the action of the pinion 32 to be brought from the advanced position into the operating position (Fig. 8), while the member 33 remains in the engaged position.

Once the operating position is reached, the motor 18 stops, and the user can use the device 9 as normal. Obviously, to disassemble the device 9, these steps are performed in reverse in relation to how they are listed.

As can be seen in Figure 8, stopping in the above-mentioned operating position preferably corresponds to the abutting of a rear projection 14a of the interface element 14 against the surface 5 of the shell 4. This abutment contributes to limiting the vibrations of the device 9 during use.

The steps listed under reference numbers 6 and 7 could be left out if the advanced and operating positions are the same (in this variant, not illustrated, the assembly 1 would not have any idler gears 29 and 30, the shaft 31, and the pinion 32).

According to an embodiment which is not illustrated, the retention member 33 is an element driven by an actuator mounted inside the member 6. This actuator, therefore, is carried, moving, by the member 6 when acted on by the rack 27. In particular, this actuator is a linear actuator, and the retention member 33 directly defined by the stem of this linear actuator, without intermediate transmissions. In this embodiment, therefore, the transmission 49 (i.e., the rack 50 and pinion 52), and preferably also the guide 38 and the slide 37, are absent, while the shifting of the retention member 33 and the shifting of the member 6 are driven by two actuators or motors that are distinct from each other.

An automatic activation system is preferably provided to make the motor 18 go again, and to retract the member 6 in the operating position, after the above-mentioned actuator has driven the retention member 33 and has, therefore, locked the device 9: in other words, a sensor or a switch, e.g. defined by an electrical contact that closes a circuit, provides a consent signal when the retention member 33 reaches a predefined locking position in the corresponding seat of the interface element 14, and this signal drives the motor 18 again. A similar automatic system preferably causes the activation of the above-mentioned actuator to lock the device 9 when the interface element 14 is mounted on the member 6 in the predefined reference position. Therefore, this type of solution also makes it possible to recognise the correct engagement of the device 9 and to simplify the movement commands, and, potentially, to also manage an anti-pinching function.

In addition, with this embodiment, the pinion 32 and the idler gears 29, 30 become superfluous and may be eliminated if the rotation direction of the motor 18 can be inverted; in fact, in this case, the pinion 28 may always be meshing with the rack 27 and cause the withdrawal of the member 6 from the advanced position towards the operating position (by inverting the rotation direction of the motor 18 in relation to what is set to shift the member 6 towards the advanced position).

From the above, it is clear how the assembly 1 is retractable, inside the dashboard 2, and makes it possible to lock the device 9 simply and securely thanks to the action of the member 33. In particular, it should be clear how the operations for coupling and uncoupling the device 9 are extremely simple since the user does not manually intervene to directly operate the member 33, since this action is motorised.

Furthermore, considering the preferred illustrated embodiment, the fact of using just one motor 18 to drive both the members 6 and 33 makes it possible to have a relatively compact solution.

The use of toothings of gears that have an angular dimension of less than 360° enables the motor to be continuously rotated (clockwise, for example) and makes it possible to phase or adjust the timing when the pinions start to engage and disengage in relation to the racks, as a function of the rotation angle of the shaft 25. In other words, by continuously rotating the motor in a single rotation direction, the parts of the toothings that are needed to achieve the required movement are selectively activated.

In addition, as mentioned above, in order to alternately activate the transmissions clutches or selectors are preferably not used, and the motor 18 is always coupled to these transmissions so that the obtained solution is compact and has a relatively small number of components.

In addition, the embodiment described above is particularly compact. In this embodiment, the retention member 33 is driven by an actuator mounted in the member 6 and is distinct from the motor 18: in this embodiment, as explained above, the transmission 49 is absent and the transmission 19 can be simplified.

From the above, it is clear, finally, how the assembly 1 described can be modified, or variants thereof produced, which do not go beyond the scope of protection of the present invention.

In particular, the member 6 and/or the member 33 could have different shapes and sizes, and/or could be coupled to the device 9 and/or to the interface element 14 in different ways, compared to what is illustrated, by way of example, in the attached figures.

## Claims

1. A support and holding assembly (1) for a portable electronic device (9), the assembly comprising:
- a support structure (3);
- a support member (6), that extends along an axis (7) and comprises a first and a second portion (8a, 8b), axially opposite each other; said first portion (8a) having, at one end, a coupling portion (10), to which said portable electronic device can be coupled, in use, in order to be arranged in a reference position; the support member (6) being movable between a withdrawn rest position and an advanced position in relation to said support structure (3) ;
- a retention member (33), that is carried by said support member (6) and can be moved in relation to said support member (6) between
a) an engaged position, in which the retention member (33) holds, in use, the portable electronic device in the reference position in relation to said support component, and
b) a disengaged position, in which the portable electronic device is free to be coupled to, and uncoupled from, said coupling portion (10);
- at least one motor or actuator (18);
- a first transmission (19) driven by said motor or actuator (18) in order to shift said support member (6) between the withdrawn rest position and the advanced position;
**characterized in that**, in the engaged position, said retention member (33) projects from said first portion (8a) so as to be coupled, in use, with a corresponding shoulder (35) of the portable electronic device (9) and/or of an interface element (14); said retention member (33) comprising at least one tooth or bolt (34) that can slide along said axis (7) to engage/disengage, in use, a corresponding seat defining the shoulder (35).

2. The assembly according to claim 1, further comprising a second transmission (49) to shift said retention member (33) between the engaged position and the disengaged position.

3. The assembly according to claim 2, wherein said second transmission (49) is also driven by said motor or actuator (18).

4. The assembly according to claim 2 or 3, wherein at least one of said first and second transmission (19, 49) comprises a rack and pinion drive.

5. The assembly according to claim 4, wherein said first and second transmissions (19, 49) comprise respective rack and pinion drives.

6. The assembly according to any of the previous claims from 2 to 5, further comprising a transmission shaft (25) permanently coupled to said first and second transmission (19, 49).

7. The assembly according to claim 6, wherein said first and second transmission (19, 49) are configured so as to shift said retention member (33) between the engaged position and the disengaged position only when said support member (6) is arranged in the advanced position.

8. The assembly according to claim 6 or 7, wherein:
- said first transmission (19) comprises a first pinion (28) and a first toothing (27) carried by said support member (6);
- said second transmission (49) comprises a second pinion (52) and a second toothing (50) carried by said retention member (33);
- the first and second pinions (28, 52) comprise corresponding toothed segments arranged in angular positions so that, when said first pinion (28) is disengaged from said first toothing (27), said second pinion (52) meshes with said second toothing (50) so as to cause, by rotation, the movement of said retention member (33).

9. The assembly according to claim 8, wherein said first and second pinions (28, 52) are carried in fixed and coaxial positions on said transmission shaft (25).

10. The assembly according to claim 8 or 9, wherein at least one of said first and second toothings (27, 50) is defined by a rack.

11. The assembly according to claim 10, **characterised in that** said rack extends along a curved trajectory.

12. The assembly according to claims 8 to 11, wherein said first transmission (19) comprises:
- an additional pinion (32), and
- a pair of idler gears (29, 30), which transmit and invert a rotary motion between said first pinion (28) and said additional pinion (32).

13. The assembly according to claim 12, wherein said additional pinion (32) has a toothed segment that engages with said first toothing (27) only when said first and second pinions (28, 52) are disengaged respectively from said first and second toothings (27, 50).

14. The assembly according to claim 1 or 2, comprising an additional motor or actuator carried by said support member (6) and distinct from said at least one motor or actuator (18); said retention member (33) being driven by said additional motor or actuator.

15. A vehicle dashboard, comprising a support and holding assembly (1) for a portable electronic device (9) according to any of the previous claims.

## Patentansprüche

1. Träger- und Halterungsanordnung (1) für eine tragbare elektronische Vorrichtung (9), wobei die Anordnung umfasst:
- eine Trägerstruktur (3);
- ein Trägerelement (6), das sich entlang einer Achse (7) erstreckt und einen ersten und einen zweiten Abschnitt (8a, 8b), einander axial gegenüber, umfasst; wobei der genannte erste Abschnitt (8a) an einem Ende einen Kopplungsabschnitt (10) aufweist, mit dem die genannte elektronische Vorrichtung, im Gebrauch, gekoppelt werden kann, um in einer Referenzposition angeordnet zu sein; wobei das Trägerelement (6) zwischen einer zurückgezogenen Ruheposition und einer vorgezogenen Position in Bezug auf die genannte Trägerstruktur (3) bewegbar ist;
- ein Retentionselement (33), das von dem genannten Trägerelement (6) getragen wird und in Bezug auf das genannte Trägerelement (6) bewegt werden kann zwischen
a) einer Eingriffposition, in der das Retentionselement (33), im Gebrauch, die tragbare elektronische Vorrichtung in der Referenzposition in Bezug auf die genannte Trägerkomponente hält, und
b) einer gelösten Position, in der die tragbare elektronische Vorrichtung frei ist, um mit dem genannten Kopplungsabschnitt (10) gekoppelt zu werden und davon entkoppelt zu werden;
- mindestens einen Motor oder Betätiger (18);
- ein erstes Getriebe (19), das von dem genannten Motor oder Betätiger (18) angetrieben wird, um das genannte Trägerelement (6) zwischen der zurückgezogenen Ruheposition und der vorgezogenen Position zu verschieben;
**dadurch gekennzeichnet, dass**, in der Eingriffposition, das genannte Retentionselement (33) von dem genannten ersten Abschnitt (8a) derart vorsteht, dass es, im Gebrauch, mit einer entsprechenden Schulter (35) der tragbaren elektronischen Vorrichtung (9) und/oder eines Schnittstellenelements (14) gekoppelt wird; wobei das genannte Retentionselement (33) mindestens einen Zahn oder Bolzen (34) umfasst, der entlang der genannten Achse (7) gleiten kann, um, im Gebrauch, mit einem entsprechenden Sitz, der die Schulter (35) definiert, in Eingriff zu gelangen/sich davon zu lösen.

2. Anordnung nach Anspruch 1, ferner umfassend ein zweites Getriebe (49), um das genannte Retentionselement (33) zwischen der Eingriffposition und der gelösten Position zu verschieben.

3. Anordnung nach Anspruch 2, wobei das zweite Getriebe (49) auch von dem genannten Motor oder Betätiger (18) angetrieben wird.

4. Anordnung nach Anspruch 2 oder 3, wobei mindestens eines von dem genannten ersten und zweiten Getriebe (19, 49) ein Zahnstangengetriebe umfasst.

5. Anordnung nach Anspruch 4, wobei das genannte erste und zweite Getriebe (19, 49) jeweilige Zahnstangengetriebe umfassen.

6. Anordnung nach einem der vorhergehenden Ansprüche von 2 bis 5, ferner umfassend eine Getriebewelle (25), die permanent mit dem genannten ersten und zweiten Getriebe (19, 49) gekoppelt ist.

7. Anordnung nach Anspruch 6, wobei das genannte erste und zweite Getriebe (19, 49) derart eingerichtet sind, dass sie das genannte Retentionselement (33) zwischen der Eingriffposition und der gelösten Position nur dann verschieben, wenn das genannte Trägerelement (6) in der vorgezogenen Position angeordnet ist.

8. Anordnung nach Anspruch 6 oder 7, wobei:
- das genannte erste Getriebe (19) ein erstes Ritzel (28) und eine erste Zahnung (27) umfasst, die von dem genannten Stützelement (6) getragen wird;
- das genannte zweite Getriebe (49) ein zweites Ritzel (52) und eine zweite Zahnung (50) umfasst, die von dem genannten Retentionselement (33) getragen wird;
- das erste und zweite Ritzel (28, 52) entsprechende gezahnte Segmente umfassen, die in Winkelpositionen derart angeordnet sind, dass, wenn das genannte erste Ritzel (28) von der genannten ersten Zahnung (27) gelöst ist, das genannte zweite Ritzel (52) mit der genannten zweiten Zahnung (50) ineinandergreift, um so durch Drehung die Bewegung des genannten Retentionselements (33) zu bewirken.

9. Anordnung nach Anspruch 8, wobei das genannte erste und zweite Ritzel (28, 52) in festen und koaxialen Positionen auf der genannten Getriebewelle (25) getragen werden.

10. Anordnung nach Anspruch 8 oder 9, wobei mindestens eine von der genannten ersten und zweiten Zahnung (27, 50) durch eine Zahnstange definiert wird.

11. Anordnung nach Anspruch 10, **dadurch gekennzeichnet, dass** sich die genannte Zahnstange entlang einer gekrümmten Bahn erstreckt.

12. Anordnung nach den Ansprüchen 8 bis 11, wobei das genannte erste Getriebe (19) umfasst:
- ein zusätzliches Ritzel (32), und
- ein Paar von Zwischenrädern (29, 30), die eine Drehbewegung zwischen dem genannten ersten Ritzel (28) und dem genannten zusätzlichen Ritzel (32) übertragen und invertieren.

13. Anordnung nach Anspruch 12, wobei das genannte zusätzliche Ritzel (32) ein gezahntes Segment aufweist, das mit der genannten ersten Zahnung (27) nur dann in Eingriff gelangt, wenn das genannte erste und zweite Ritzel (28, 52) jeweils von der genannten ersten und zweiten Zahnung (27, 50) gelöst sind.

14. Anordnung nach Anspruch 1 oder 2, umfassend einen zusätzlichen Motor oder Betätiger, der von dem genannten Trägerelement (6) getragen wird und von dem genannten mindestens einen Motor oder Betätiger (18) verschieden ist; wobei das genannte Retentionselement (33) von dem genannten zusätzlichen Motor oder Betätiger angetrieben wird.

15. Fahrzeugarmaturenbrett, umfassend eine Träger- und Halteanordnung (1) für eine tragbare elektronische Vorrichtung (9) nach einem der vorhergehenden Ansprüche.

## Revendications

1. Ensemble de support et de maintien (1) pour un dispositif électronique portable (9), l'ensemble comprenant :
une structure de support (3) ;
un élément de support (6) qui s'étend le long d'un axe (7) et comprend une première et une seconde partie (8a, 8b), axialement opposées entre elles ; ladite première partie (8a) ayant, au niveau d'une extrémité, une partie de couplage (10), à laquelle ledit dispositif électronique portable peut être couplé, à l'usage, afin d'être disposé dans une position de référence ; l'élément de support (6) étant mobile entre une position reculée de repos et une position avancée par rapport à ladite structure de support (3) ;
un élément de retenue (33) qui est porté par ledit élément de support (6) et peut être déplacé par rapport audit élément de support (6) entre :
a) une position mise en prise, dans laquelle l'élément de retenue (33) maintient, à l'usage, le dispositif électronique portable dans la position de référence par rapport audit composant de support, et
b) une position dégagée, dans laquelle le dispositif électronique portable est libre d'être couplé à et découplé de ladite partie de couplage (10) ;
au moins un moteur ou actionneur (18) ;
une première transmission (19) entraînée par ledit moteur ou actionneur (18) afin de déplacer ledit élément de support (6) entre la position reculée de repos et la position avancée ;
**caractérisé en ce que**, dans la position mise en prise, ledit élément de retenue (33) fait saillie de ladite première partie (8a) afin d'être couplé, à l'usage, avec un épaulement (35) correspondant du dispositif électronique portable (9) et/ou d'un élément d'interface (14) ; ledit élément de retenue (33) comprenant au moins une dent ou boulon (34) qui peut coulisser le long dudit axe (7) pour mettre en prise/dégager, à l'usage, un siège correspondant définissant l'épaulement (35).

2. Ensemble selon la revendication 1, comprenant en outre une seconde transmission (49) pour déplacer ledit élément de retenue (33) entre la position mise en prise et la position dégagée.

3. Ensemble selon la revendication 2, dans lequel ladite seconde transmission (49) est également entraînée par ledit moteur ou actionneur (18).

4. Ensemble selon la revendication 2 ou 3, dans lequel au moins l'une parmi lesdites première et seconde transmissions (19, 49) comprend un engrenage à crémaillère.

5. Ensemble selon la revendication 4, dans lequel lesdites première et seconde transmissions (19, 49) comprennent des engrenages à crémaillère respectifs.

6. Ensemble selon l'une quelconque des revendications 2 à 5, comprenant en outre un arbre de transmission (25) couplé, de manière permanente, auxdites première et seconde transmissions (19, 49).

7. Ensemble selon la revendication 6, dans lequel lesdites première et seconde transmissions (19, 49) sont configurées afin de déplacer ledit élément de retenue (33) entre la position mise en prise et la position dégagée uniquement lorsque ledit élément de support (6) est disposé dans la position avancée.

8. Ensemble selon la revendication 6 ou 7, dans lequel :
ladite première transmission (19) comprend un premier pignon (28) et une première denture (27) portée par ledit élément de support (6) ;
ladite seconde transmission (49) comprend un second pignon (52) et une seconde denture (50) portée par ledit élément de retenue (33) ;
les premier et second pignons (28, 52) comprennent des segments dentés correspondants disposés dans des positions angulaires de sorte que, lorsque ledit premier pignon (28) est dégagé de ladite première denture (27), ledit second pignon (52) s'engrène avec ladite seconde denture (50) afin de provoquer, par rotation, le mouvement dudit élément de retenue (33).

9. Ensemble selon la revendication 8, dans lequel lesdits premier et second pignons (28, 52) sont portés dans des positions fixes et coaxiales sur ledit arbre de transmission (25).

10. Ensemble selon la revendication 8 ou 9, dans lequel au moins l'une parmi lesdites première et seconde dentures (27, 50) est définie par une crémaillère.

11. Ensemble selon la revendication 10, **caractérisé en ce que** ladite crémaillère s'étend le long d'une trajectoire courbée.

12. Ensemble selon les revendications 8 à 11, dans lequel ladite première transmission (19) comprend :
un pignon supplémentaire (32), et
une paire d'engrenages de renvoi (29, 30) qui transmet et inverse un mouvement de rotation entre ledit premier pignon (28) et ledit pignon supplémentaire (32).

13. Ensemble selon la revendication 12, dans lequel ledit pignon supplémentaire (32) a un segment denté qui se met en prise avec ladite première denture (27) uniquement lorsque lesdits premier et second pignons (28, 52) sont respectivement dégagés desdites première et seconde dentures (27, 50).

14. Ensemble selon la revendication 1 ou 2, comprenant un moteur ou actionneur supplémentaire porté par ledit élément de support (6) et distinct dudit au moins un moteur ou actionneur (18) ; ledit élément de retenue (33) étant entraîné par ledit moteur ou actionneur supplémentaire.

15. Tableau de bord de véhicule comprenant un ensemble de support et de maintien (1) pour un dispositif électronique portable (9) selon l'une quelconque des revendications précédentes.
